# EUROPÄISCHE PATENTANMELDUNG

(11) **EP 1 231 531 A1**
(43) Veröffentlichungstag der Anmeldung: **14.08.2002**
(21) Anmeldenummer: 01810138.6
(22) Anmeldetag: 09.02.2001
(51) Int. Cl.: G06F 1/00

(54) **Verfahren, Anordnung und Sicherheitsmedium zur Benutzer-Authentifikation beim Zugriff auf vertrauliche Daten**

(71) Anmelder: Human Bios GmbH, 8280 Kreuzlingen (CH)
(72) Erfinder: Kisters, Friedrich, 8280 Kreuzlingen (CH)
(74) Vertreter: Roshardt, Werner Alfred, Dipl.-Phys.

(57) **Zusammenfassung**

Beim Zugriff auf vertrauliche Daten bzw. Bereiche eines EDV-Systems (2) durch einen Benutzer (9), wird diesem der Zugriff nur gewährt, wenn er sich mit Benutzernamen und Passwort korrekt beim EDV-System anmeldet (16) und sich darüber hinaus mit einem nur ihm zugänglichen Zugangscode (21) aus einer Datenbank (5.2) als zugangsberechtigt ausweisen kann. Die Datenbank ist auf einer Chipkarte (5) abgespeichert und der Zugriff auf die Datenbank ist doppelt abgesichert. Zugriff auf die Zugangscodes in der Datenbank erhält nur derjenige Benutzer, der sich korrekt, beispielsweise mittels biometrischer Daten, gegenüber der Chipkarte authentifizieren kann (12). Zudem kann der Zugriff auf die Zugangscodes in der Datenbank nur durch ein auf der Chipkarte abgespeichertes Programm (5.1) erfolgen, das sich erst nach einer korrekten Authentifizierung durch den Benutzer gegenüber der Chipkarte aktivieren lässt und das sich direkt auf der Datenbank mittels einer im Programmcode eingebauten ID korrekt authentifiziert haben muss (20).

## Beschreibung

### Technisches Gebiet

Die Erfindung betrifft ein Verfahren zur Authentifizierung eines Benutzers für einen Zugriff auf vertrauliche Daten bzw. Bereiche einer Datenverarbeitungsvorrichtung, wobei ein Zugangscode aus einer auf einem Sicherheitsmedium abgespeicherten Datenbank ausgelesen und an die Datenverarbeitungsvorrichtung übermittelt wird. Weiter betrifft die Erfindung eine Anordnung zur Authentifizierung eines Benutzers sowie ein entsprechendes Sicherheitsmedium.

### Stand der Technik

Mit der Verbreitung moderner Kommunikationssysteme wächst auch der Bedarf, diese Kommunikationssysteme für Anwendungen zu nutzen, welche ursprünglich nicht für derartige Systeme entwickelt wurden. Beispielsweise werden immer häufiger Warenkäufe bzw. -verkäufe oder auch Rechts- bzw. Bankgeschäfte über Kommunikationsnetze abgewickelt, welche öffentlich zugänglich sind. Ein Beispiel für ein solches Kommunikationsnetz ist das Internet, das eine einfache, schnelle und kostengünstige Möglichkeit zur weltweiten Kommunikation bietet. Allerdings ist die Kommunikation über derartige Netze vom Prinzip her ungeschützt, d. h. für jedermann, der über ein wenig technisches Know-How und die entsprechende Ausrüstung verfügt, mithör- und sogar veränderbar.

Es gibt jedoch diverse Gründe, die für eine geschützte Kommunikation sprechen. Beispielsweise wenn die übertragenen Informationen der Öffentlichkeit nicht zugänglich gemacht werden sollen, wenn sichergestellt werden muss, dass die Information genau so ankommt, wie sie abgeschickt worden ist oder wenn die Geschäftspartner einander unbekannt sind und vor der Übertragung vertraulicher Informationen die Identität ihres Gegenübers überprüfen wollen. Dies gilt inbesondere auch für Bankgeschäfte wie dem sogenannten Home- oder Online-Banking, bei dem der Kunde einer Bank seine Konti via Internet selber bewirtschaftet, d. h. beispielsweise Kontostände abfragt, Zahlungen veranlasst oder Aktienkäufe tätigt.

Zur Authentifizierung eines Benutzers, der sich beispielsweise via Internet auf der Homepage seiner Bank anmeldet, wurden schon verschiedene Möglichkeiten vorgeschlagen. Eine Möglichkeit besteht darin, dass der Benutzer beim Einloggen nebst einem Benutzernamen und einem Kennwort auch den jeweils nächsten Zugangscode aus einer in Papierform vorliegenden und nur dem Benutzer (und natürlich der Bank) bekannten Streichliste eingibt. Wird dem Benutzer die Streichliste jedoch gestohlen, kann sich der Dieb gegenüber der Bank als neuer Besitzer ausgeben und unbefugt Zutritt zu den Konti des Benutzers verschaffen. Es wurde auch schon vorgeschlagen, die Streichliste in elektronischer Form, beispielsweise auf einer Diskette, abzuspeichern. Allerdings kann sie auch in diesem Fall ausspioniert werden, indem sie beispielsweise von einem unberechtigten Dritten ausgelesen wird, wenn der Benutzer online ist. Zudem ist es natürlich auch möglich, in das EDV-System der Bank einzudringen und sich so die benötigten Informationen zu beschaffen.

Eine weitere Möglichkeit ist die Verwendung einer prozessorgestützten Karte mit automatischer Generierung eines Zugangscodes durch ein kleines Programm, das parallel sowohl auf der Karte, als auch auf dem Bankserver abläuft. Durch Mitprotokollieren kann dieses Programm allerdings rekonstruiert und ein danach selbst generierter Zugangscode für missbräuchliche Zwecke eingesetzt werden.

Bei anderen, bekannten Systemen werden sogenannte Chipkarten verwendet, auf welchen zur Identifikation biometrische Daten des Benutzers (beispielsweise Fingerabdrücke, Daten über die Iris oder über die Stimme des Benutzers) gespeichert sind. Aber auch hier ist es möglich, durch Mitprotokollieren in den Besitz dieser persönlichen Daten zu gelangen und dem Bankserver bei einem missbräuchlichen Anmeldeversuch die Identität des Benutzers vorzutäuschen.

Es gibt also bisher kein System zur sicheren Authentifizierung eines Benutzers beim Zugriff auf vertrauliche Daten über ein offenes Netz wie beispielsweise das Internet.

### Darstellung der Erfindung

Aufgabe der Erfindung ist es, ein Verfahren der eingangs erwähnten Art anzugeben, welches die beim Stand der Technik vorhandenen Probleme vermeidet und insbesondere eine sichere Authentifizierung eines Benutzers beim Zugriff auf vertrauliche Daten erlaubt.

Die Lösung der Aufgabe ist durch die Merkmale des Anspruchs 1 definiert. Gemäss der Erfindung wird beim Zugriff auf vertrauliche Daten bzw. Bereiche einer Datenverarbeitungsvorrichtung ein Zugangscode aus einer Datenbank ausgelesen und an die Datenverarbeitungsvorrichtung übermittelt. Die Datenbank ist auf einem Sicherheitsmedium abgespeichert und der Zugriff auf die Datenbank ist nur für den vorgängig autorisierten Benutzer möglich, d. h. der richtige Zugangscode zur Übermittlung an die Datenverarbeitungsvorrichtung kann nur dann aus der Datenbank ausgelesen werden, wenn vorgängig eine Authentifizierung des Benutzers durchgeführt und der Benutzer korrekt authentifiziert worden ist.

Bei den Daten und/oder Bereichen handelt es sich typischerweise um vertrauliche Informationen, wobei auch der Zugriff auf sämtliche Daten oder Bereiche der Datenverarbeitungsvorrichtung limitiert bzw. kontrolliert werden kann.

Das erfindungsgemässe Verfahren ist eine Kombination, eine Verschachtelung mehrerer bekannter Verfahren zur Authentifizierung. Damit der Benutzer überhaupt in den Besitz des richtigen Zugangscodes gelangt, d. h. diesen an die Datenverarbeitungsvorrichtung übermitteln kann, muss er sich zunächst gegenüber dem Sicherheitsmedium korrekt ausweisen.

Es genügt daher nicht, wenn ein potentieller Angreifer auf dem unsicheren Netz mithört, denn es wird bei jedem Verbindungsaufbau ein neuer Zugangscode verwendet. Für den Angreifer ist es unmöglich, den nächsten Zugangscode zu erraten, denn die Zugangscodes werden vorgängig von einem Algorithmus zur Erzeugung von Zufallszahlen erzeugt und in der Datenbank auf dem Sicherheitsmedium abgespeichert. Ein Mithören beim Erzeugen dieser Zugangscodes und das Rekonstruieren des entsprechenden Programmes ist daher nicht möglich.

Weiter genügt es auch nicht, dem Benutzer das Sicherheitsmedium zu entwenden, denn nur der Benutzer selber kann sich gegenüber dem Sicherheitsmedium korrekt authentifizieren und damit den Zugang zu den in der Datenbank abgespeicherten Zugangscodes freischalten.

Zur Verwendung als Sicherheitsmedien eignen sich in erster Linie Vorrichtungen, welche einen Speicher für elektronische Daten, einen Prozessor zur Verarbeitung solcher Daten sowie allenfalls Schnittstellen zur Kommunikation mit der Umwelt bzw. anderen Geräten aufweisen. Da solche Sicherheitsmedien portabel und damit auch klein und leicht sein sollen, bieten sich Chipkarten für diesen Zweck geradezu an. Ohne damit andere Sicherheitsmedien auszuschliessen, wird im Folgenden deshalb mehrheitlich der Begriff Chipkarte verwendet.

Zur Authentifizierung des Benutzers gegenüber dem Sicherheitsmedium kann im Prinzip jedes bekannte Verfahren (beispielsweise softwaremässig durch Eingabe eines Kennwortes oder einer PIN, aber auch hardwaremässig beispielsweise durch Einstecken und Drehen eines passenden Schlüssels oder durch Einstecken eines Dongles) angewendet werden. Mit Vorteil wird jedoch ein Verfahren verwendet, bei welchem die Identität des Benutzers anhand von benutzerspezifischen Identifikationsmerkmalen überprüft wird. Zu solchen Merkmalen gehören beispielsweise biometrische Daten des Benutzers wie ein Fingerabdruck, das Frequenzspektrum seiner Stimme oder die Strukturierung seiner Iris. Weitere biometrische Daten sind durchaus denkbar.

Die Überprüfung der Authentifizierung des Benutzers wird nun durchgeführt, indem zunächst im Zusammenhang mit der Erstellung der Chipkarte benutzerspezifische Indentifikationsmerkmale des Chipkarten-Besitzers erfasst und in geeigneter Form im Speicher der Chipkarte abgelegt werden. Beim Gebrauch der Chipkarte durch den Benutzer werden dieselben benutzerspezifischen Identifikationsmerkmale wieder ermittelt und mit den auf der Chipkarte abgespeicherten Identifikationsmerkmalen verglichen. Stimmen diese Merkmale überein, hat sich der Benutzer korrekt authentifiziert und die Chipkarte kann aktiviert werden.

Anstatt eines einzelnen Benutzers kann es sich natürlich auch um eine Benutzergruppe handeln, deren Mitglieder auf die vertraulichen Daten zugreifen möchten. Die vorgängig oder nachfolgend beschriebenen Verfahrensschritte können auf eine einfache Art und Weise an eine Mehrzahl von Benutzern angepasst werden.

Ist die Chipkarte aktiviert, kann der nächste Zugangscode, nachfolgend auch Code genannt, aus der Datenbank ausgelesen und an die Datenverarbeitungsvorrichtung übermittelt werden. Bei Zugriffen auf firmeneigene EDV-Systeme, wo die Kommunikation zwischen Benutzer und Datenverarbeitungsvorrichtung ausschliesslich über interne Kommunikationsnetze verläuft, sind derart aufwendige Sicherheitsvorkehrungen zwar nicht unbedingt notwendig, können aber dennoch sinnvoll sein. Vorzugsweise wird das erfindungsgemässe Verfahren jedoch dort angewendet, wo der Zugriff auf die Datenverarbeitungsvorrichtung über ein öffentliches Kommunikationsnetz wie beispielsweise das Internet erfolgt.

Um, wo dies die Art der übermittelten Daten verlangt, auch die Vertraulichkeit der übermittelten Daten zu gewährleisten, erfolgt die Kommunikation zwischen dem Benutzer und der Datenverarbeitung verschlüsselt. Zum Anzeigen von Internetseiten werden typischerweise spezielle Programme, sogenannte Browser, verwendet, welche auf dem Gerät, das der Benutzer für den Internetzugang verwendet, abgespeichert sind und dort ablaufen. Solche Browser verfügen in der Regel über eingebaute Mechanismen zur Verschlüsselung der Kommunikation zwischen dem Benutzer und dem entsprechenden Server. Die Verschlüsselung erfolgt mit bekannten Verschlüsselungsverfahren, beispielsweise mit einem asymmetrischen Verschlüsselungsverfahren wie dem Public-Key Verfahren, unter Verwendung eines Schlüssels bzw. eines oder mehrerer entsprechender Schlüsselpaare von öffentlichem und privatem Schlüssel. Zur Verschlüsselung der Kommunikation mit einem asymmetrischen Verfahren benötigen die beiden Kommunikationspartner typischerweise je ein Schlüsselpaar.

Der bzw. die Schlüssel des Benutzers sind bevorzugt auf der Chipkarte abgelegt, wo sie vom Benutzer resp. dessen Browser oder Computer ausgelesen und dort zwischengespeichert werden können.

Die Verschlüsselung selbst erfolgt wie bereits erwähnt beispielsweise mit einem der bekannten asymmetrischen Verschlüsselungsverfahren. Hierbei verschlüsselt der Benutzer die von ihm gesendeten Daten mit dem einen und entschlüsselt empfangene Daten mit dem anderen Schlüssel. Das Gleiche gilt auch für die Datenverarbeitungsvorrichtung, welche die entsprechenden Schlüssel aus ihrer Datenbank entnimmt. Benutzerseitig sind die Schlüssel an einem hierfür vorgesehenen Ort, beispielsweise auf dem Computer des Benutzers und/oder dessen Browser und/oder, damit der Benutzer mobiler ist, bevorzugt auf der Chipkarte, abgespeichert.

Um das unberechtigte Auslesen der auf dem Computer bzw. im Browser des Benutzers zwischengespeicherten Schlüssel zu verhindern, können diese aus dem Browser bzw. dem Computer gelöscht werden, sobald sich der Benutzer von der Homepage des Servers abmeldet bzw. wenn die Schlüssel nicht mehr benötigt werden.

Die Länge der verwendeten Schlüssel hängt ab von der gewünschten bzw. benötigten Sicherheit und liegt zwischen einigen wenigen und einigen Tausend Bits Länge. Je länger die Schlüssel sind, desto schwieriger ist es, die Schlüssel zu knacken.

Natürlich können auch andere unsymmetrische oder auch symmetrische Verschlüsselungsverfahren oder Kombinationen davon eingesetzt werden. Das genannte Public-Key Verfahren hat allerdings den Vorteil, dass es schon weit verbreitet und anerkannt ist.

Nach dem Einrichten einer verschlüsselten Kommunikation, folgt bevorzugt ein nächster Schritt im Anmeldeverfahren, bei welchem vom Benutzer die Eingabe eines Benutzernamens und eines Passwortes verlangt wird. Sind die Angaben nicht korrekt, wird eine Fehlermeldung angezeigt und der Anmeldevorgang entweder abgebrochen oder der Benutzer bekommt eine weitere Chance, die verlangten Daten korrekt einzugeben. Sind die Angaben korrekt, geht es weiter zum nächsten Schritt.

Jetzt folgt das Auslesen des Codes aus der Chipkarten-Datenbank. Dies geschieht vorzugsweise, indem ein entsprechendes Programm, nachfolgend Vermittlerprogramm genannt, gestartet wird. Dieses wiederum startet ein auf der Chipkarte gespeichertes Programm, nachfolgend Kartenprogramm genannt. Dieses Kartenprogramm liest aus der Datenbank den nächsten Code aus und übergibt ihn dem Vermittlerprogramm.

Das Vermittlerprogramm übermittelt den vom Kartenprogramm erhaltenen Code an die Datenverarbeitungsvorrichtung, welche eine Prüfung des Codes durchführt. Ist die Prüfung erfolgreich, wird dem Benutzer der Zugriff auf die vertraulichen Daten bzw. Bereiche erlaubt. Ansonsten wird dem Benutzer der Zugriff auf die gewünschten Daten verweigert und beispielsweise eine Fehlermeldung angezeigt.

Bei dem Vermittlerprogramm handelt es sich beispielsweise um ein Java-Programm, was den Vorteil hat, dass nicht auf die vom Benutzer verwendete Soft- und/oder Hardwarplattform Rücksicht genommen werden muss.

Um die Sicherheit weiter zu erhöhen, muss sich das Vermittlerprogramm vorzugsweise auf der Chipkarte authentifizieren, bevor es das Kartenprogramm zum Auslesen eines Codes aus der Datenbank starten kann. Dies geschieht beispielsweise, indem die Chipkarte überprüft, ob sich das Vermittlerprogramm mit einem Autorisierungscode ausweisen kann, den sich das Vermittlerprogramm beispielsweise von der Datenverarbeitungsvorrichtung holt und der auch auf der Chipkarte gespeichert ist. Eine weitere Möglichkeit bestünde darin, dass ein solcher Autorisierungscode bei jedem Zugriff auf die Chipkarte neu berechnet wird, beispielsweise in Abhängigkeit von Benutzerdaten, dem Zeitpunkt, der Anzahl noch vorhandener Zugangscodes in der Datenbank, deren Quersumme, der digitalen Unterschrift des Benutzers, dessen öffentlichem Schlüssel oder anderer Informationen.

Eine Authentifizierung wird vorzugsweise auch vom Kartenprogramm verlangt. Das Kartenprogramm muss sich jedoch direkt auf der Datenbank authentifizieren, bevor es den nächsten Code auslesen kann. Die Authentifizierung kann beispielsweise in der Programmierung des Kartenprogrammes versteckt sein oder sie erfolgt wie bei der Authentifizierung des Vermittlerprogrammes bei der Chipkarte über einen Autorisierungscode. Das Kartenprogramm kann entsprechend kartenspezifisch konzipiert sein, sodass das Kartenprogramm einer ersten Chipkarte nicht zum Auslesen der Codes aus der Datenbank einer zweiten Chipkarte verwendet werden kann, da es sich nicht korrekt bei der Datenbank authentifizieren kann. Jede Chipkarte kann quasi ein individuelles Kartenprogram bzw. eine individuelle Authentifizierung aufweisen.

Nachdem das Kartenprogramm dem Vermittlerprogramm den Code übergeben hat, werden, um sicherzustellen, dass ein ausgelesener Code nicht ein zweites Mal aus der Datenbank ausgelesen und nochmals verwendet werden kann, vorzugsweise die beiden nachfolgenden Schritte ausgeführt. Nach dem Erhalt des Codes vom Kartenprogramm bestätigt das Vermittlerprogramm dies dem Kartenprogramm, welches daraufhin den ausgelesenen Code unwiderruflich aus der Datenbank löscht.

Hierbei kann es jedoch vorkommen, dass der vom Vermittlerprogramm an die Datenverarbeitungsvorrichtung übermittelte Code nicht mit dem von ihr erwarteten Code übereinstimmt. Dies kann geschehen, wenn beispielsweise bei einem früheren Anmeldevorgang der Kommunikationskanal genau in dem Moment unterbrochen worden ist, nachdem das Vermittlerprogramm den Empfang des Codes bestätigt, den Code aber noch nicht an die Datenverarbeitungsvorrichtung übermittelt hat. Beim nächsten Anmeldevorgang wird dann von der Datenbank ein neuer Code ausgelesen, wobei der vorherige Code noch nicht aus der Liste der Datenverarbeitungsvorrichtung gelöscht worden und dort demzufolge noch aufgeführt ist.

Bei der Prüfung des Codes kontrolliert die Datenverarbeitungsvorrichtung also nicht nur, ob der empfangene Code mit dem nächsten Code ihrer Liste übereinstimmt, sondern auch, ob der empfangene Code mit einem der darauffolgenden Codes übereinstimmt. Findet es diesen Code, so gibt sie dem Benutzer den Zugriff frei.

Nachfolgend soll eine erfindungsgemässe Anordnung zur Authentifizierung eines Benutzers für einen Zugriff auf vertrauliche Daten bzw. Bereiche einer Datenverarbeitungsvorrichtung, insbesondere ein Verfahren wie das vorgängig erläuterte, beschrieben werden. Die Anordnung umfasst ein Sicherheitsmedium, erste Mittel für einen Zugriff auf das Sicherheitsmedium sowie zweite Mittel zur Ermittlung von benutzerspezifischen Identifikationsmerkmalen wie beispielsweise biometrischen Daten des Benutzers. Das Sicherheitsmedium, beispielsweise eine Chipkarte, weist nebst einem Prozessor auch einen Speicher auf, in welchem eine Datenbank mit einer Mehrzahl von Codes und einem Programm für den Zugriff auf diese Datenbank sowie benutzerspezifische Identifikationsmerkmale des Benutzers abgespeichert sind. Weiter umfasst die Anordnung dritte Mittel zum Vergleichen der ermittelten benutzerspezifischen Identifikationsmerkmale mit den im Zusammenhang mit der Erstellung des Sicherheitsmediums erfassten und auf dem Sicherheitsmedium abgespeicherten benutzerspezifischen Identifikationsmerkmalen.

Die ersten Mittel ermöglichen überhaupt erst einen Zugriff auf die Chipkarte, d. h. eine elektronische Kommunikation mit dem Prozessor und das Auslesen von im Speicher abgelegten Informationen wie einem Code aus der Datenbank. Es kann beispielsweise ein sogenannter Chipkartenleser oder ein anderes Gerät verwendet werden, der bzw. das mit dem vom Benutzer verwendeten Computer zwecks Datenaustausch verbunden werden kann und der bzw. das über entsprechende elektrische Kontaktstellen verfügt, über welche beim Einstecken der Chipkarte die notwendigen Verbindungen hergestellt werden.

Es ist durchaus möglich, die dritten Mittel zum Vergleichen der Benutzerinformationen in einem bereits vorhandenen Gerät der Anordnung, beispielsweise im Computer oder im Chipkartenleser oder auch in einem eigenständigen Gerät unterzubringen. Mit Vorteil werden die dritten Mittel jedoch auf der Chipkarte selber integriert, denn dadurch entfällt das Auslesen und die Übermittlung der auf der Karte gespeicherten Informationen. Die beim Erstellen der Chipkarte erfassten und darauf gespeicherten benutzerspezifischen Informationen verbleiben somit auf der Chipkarte und müssen nie daraus ausgelesen werden.

Weiter ist es auch möglich, die zweiten Mittel, d. h. entsprechende Sensoren oder Schnittstellen wie beispielsweise optische Sensoren zur Bestimmung der Iris-Struktur oder eines Fingerabdrucks des Benutzers, akustische Sensoren zur Bestimmung des Frequenzspektrums der Stimme des Benutzers oder auch andere Sensoren bzw. Schnittstellen wie beispielsweise eine Tastatur zur Eingabe eines Kennwortes, in einem bereits vorhandenen oder in einem eigenständigen Gerät unterzubringen. Bevorzugt werden jedoch auch die zweiten Mittel in die Chipkarte integriert. Dies hat den Vorteil, dass die ermittelten benutzerspezifischen Identifikationsmerkmale gleich dort verarbeitet, d. h. mit den im Speicher der Chipkarte abgelegten Benutzermerkmalen verglichen werden können und nicht zuerst dorthin übermittelt werden müssen.

Bei einer weiteren bevorzugten Ausführungsform sind die Sensoren in den Chipkartenleser integriert. Dadurch müssen die ermittelten benutzerspezifischen Identifikationsmerkmale zwar an die Chipkarte übermittelt werden, da die Chipkarte aber in dem Chipkartenleser drin steckt, ist dies kein Problem und die Chipkarte muss weniger aufwändig ausgebildet sein.

Die Verschlüsselung der Kommunikation zwischen dem Benutzer und der Datenverarbeitungsvorrichtung erfolgt wie bereits erwähnt beispielsweise mit einer unsymmetrischen Verschlüsselungsmethode basierend auf dem Public-Key Verfahren. Damit die Datenverarbeitungsvorrichtung zur Verschlüsselung auch die richtigen Schlüssel, d. h. die Schlüssel des Benutzers, verwendet, muss sie zunächst die Identität des Benutzers bestimmen. Vorzugsweise sind auf der Chipkarte hierfür entsprechende Informationen zur Identifikation des Benutzers, beispielsweise der öffentliche Schlüssel des Benutzers, seine elektronische Unterschrift oder andere Benutzerinformationen, gespeichert. Diese Informationen werden zur Datenverarbeitungsvorrichtung übermittelt, welche diese analysiert und daraus auf die Identität des Benutzers schliesst. Anhand der elektronischen Unterschrift könnte beipsielsweise gleichzeitig auch noch deren Gültigkeit überprüft werden.

Bei einer weiteren bevorzugten Ausführungsform der erfindungsgemässen Anordnung weist die Chipkarte vierte Mittel auf, mit welchen die Datenbank im Speicher der Chipkarte gelöscht werden kann. Dies ist eine reine Vorsichtsmassnahme und geschieht beispielsweise, wenn die Chipkarte einen missbräuchlichen Zugriff auf die Datenbank oder andere Unstimmigkeiten feststellt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine erfindungsgemässe Anordnung zur Benutzerauthentifizierung;
- Fig. 2: eine Chipkarte zur Verwendung in der Anordnung gemäss Fig. 1 und
- Fig. 3: ein schematisch dargestelltes Ablaufdiagramm des erfindgungsgemässen Verfahrens zur Benutzerauthentifizierung.

Grundsätzlich sind in den Figuren gleiche Teile mit gleichen Bezugszeichen versehen.

### Wege zur Ausführung der Erfindung

Im nachfolgenden Ausführungsbeispiel ist die Authentifizierung eines Benutzers durch einen Server beschrieben, auf dem beispielsweise die Internetseite einer Bank abgespeichert ist und auf welche der Benutzer via Internet zugreifen und sich beispielsweise persönliche und damit vertrauliche Daten wie seine eigenen Kontostände ansehen möchte. Das Internet ist nun aber ein offenes Medium ohne eingebaute Verschlüsselungs- oder anderer Sicherheitsverfahren. D. h. der Benutzer, der nicht nur an einer vertraulichen Kommunikation interessiert ist, sondern auch sicherstellen möchte, dass nur er auf seine persönlichen Daten zugreifen kann, muss entsprechende Massnahmen vorkehren. Entsprechendes gilt natürlich auch für den Server, der niemandem ausser dem Benutzer selber den Zugang zu dessen Daten gewähren darf.

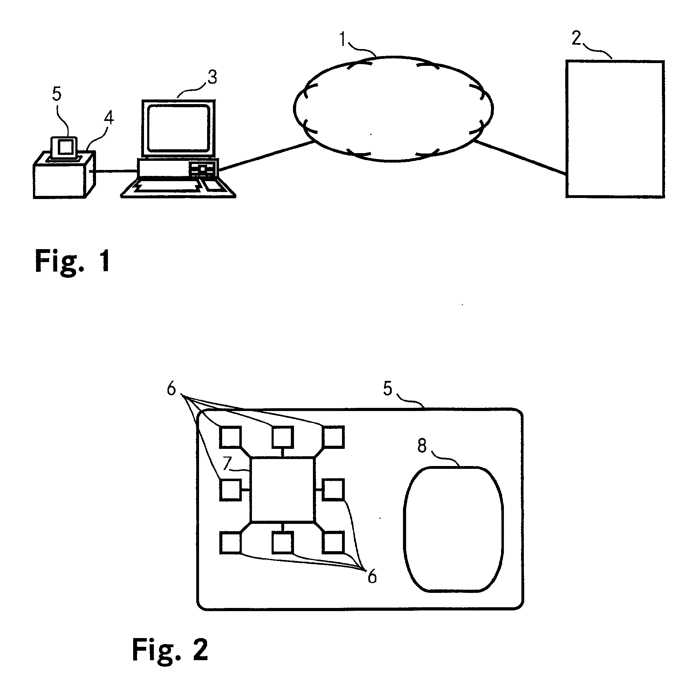

Figur 1 zeigt das Internet 1, an welches sowohl der Server 2 als auch der Computer 3 des Benutzers angeschlossen sind. Selbstverständlich können beide auch indirekt über einen Internet Service Provider ans Internet angeschlossen sein. Am Computer 3 ist ein Lesegerät 4 angeschlossen, in welches der Benutzer seine Chipkarte 5 einstecken kann.

Das Lesegerät 4 ist in der Lage, mit dem Prozessor 7 einer in das Lesegerät 4 eingesteckten Chipkarte 5 zu kommunizieren bzw. auf den hier in den Prozessor 7 integrierten Speicher der Chipkarte zuzugreifen. Wie aus Figur 2 ersichtlich ist, verfügt die Chipkarte 5 hierfür über Kontaktstellen 6, welche mit dem Prozessor 7 verbunden sind und über die bei eingesteckter Chipkarte 5 mit entsprechenden Kontaktstellen im Lesegerät 4 elektrische Verbindungen zwischen dem Prozessor 7 und dem Lesegerät 4 bzw. dem Computer 3 hergestellt werden. Natürlich eignen sich zur Kommunikation von Chipkarte 5 und Lesegerät 4 auch berührungslose Kommunikationsmethoden wie beispielsweise Funk oder Verfahren auf Basis der magnetischen Induktion.

Weiter weist die Chipkarte 5 einen Sensor 8 auf, welcher bei dem gewählten Ausführungsbeispiel zur Bestimmung eines Fingerabdruckes des Benutzers dient. Dieser kann den entsprechenden Finger bei eingesteckter Chipkarte auf den Sensor 8 auflegen. Anstatt den Sensor 8 auf der Chipkarte 5 zu integrieren, ist es auch möglich, ihn beispielsweise im Lesegerät 4 unterzubringen.

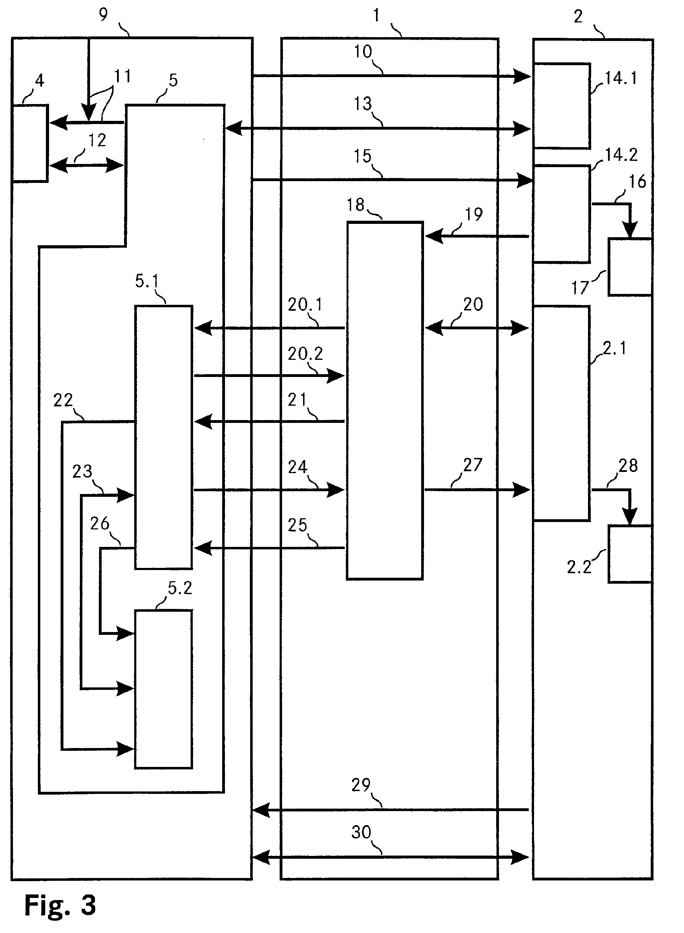

Figur 3 zeigt schematisch dargestellt ein Diagramm des Verfahrens, wie es abläuft beim Anmelden des Benutzers auf der Homepage der Bank. Zum Öffnen 10 der Homepage, d. h. beim Öffnen 10 der Zugangsseite 14.1, auf dem Server 2 der Bank via Internet 1 gibt der Benutzer 9 beispielsweise die entsprechende URL-Adresse in seinem Browser ein oder er klickt auf einen entsprechenden Link.

Nach dem Einstecken 1 1 der Chipkarte 5 in das Lesegerät 4 folgt die Authentifizierung 12 des Benutzers 9 gegenüber der Chipkarte 5 mittels Auflegen des Daumens oder eines anderen Fingers auf den Sensor 8. Dieser Vorgang kann dem Benutzer 9 selbstverständlich auch auf der angewählten Zugangsseite 14.1 erklärt und beschrieben werden. Die Chipkarte 5 überprüft den erfassten Fingerabdruck und vergleicht ihn mit dem im Speicher der Chipkarte 5 abgespeicherten Fingerabdruck des Benutzers, wobei unter dem Begriff Fingerabdruck nicht nur optische Merkmale wie die Linienanordnung, sondern auch andere Merkmale wie beispielsweise eine Wärmeverteilung verstanden werden können. Stimmen die beiden Fingerabdrücke nicht überein, d. h. ist die Authentifizierung 12 des Benutzers 9 gegenüber der Chipkarte 5 fehlgeschlagen (nicht dargestellt), wird die Chipkarte 5 nicht aktiviert und es kann kein Zugangscode aus der Datenbank ausgelesen werden.

Stimmen die Fingerabdrücke hingegen überein, wird die Chipkarte 5 aktiviert und der Anmeldevorgang kann fortgeführt werden, was beispielsweise mittels eines Klicks auf einen Button "Weiter" auf der vom Server 2 angezeigten Zugangsseite 14.1 erfolgt.

Daraufhin folgt der Aufbau 13 einer verschlüsselten Kommunikation zwischen dem Server 2 und dem Benutzer 9 resp. dessen Computer oder Browser. Hierfür werden beispielsweise die auf der Chipkarte gespeicherten Informationen zur Identifikation des Benutzers 9 zur Datenverarbeitungsvorrichtung übermittelt, welche anhand dieser Informationen die Identität des Benutzers bestimmen und die entsprechenden Schlüssel bereitstellen kann. Ab diesem Zeitpunkt kommuniziert der Server 2 nur noch verschlüsselt mit dem Benutzer 9, wobei die Verschlüsselung mit einem bekannten asymmetrischen oder symmetrischen Verschlüsselungsverfahren erfolgt.

Nach dem Aufbau 13 einer verschlüsselten Kommunikation wird die Anmelde-Seite 14.2 zum Einloggen 15 des Benutzers geöffnet. Das Einloggen 15 des Benutzers 9 erfolgt mittels Eingabe eines Benutzernamens und des dazugehörigen Passwortes durch den Benutzer 9. Danach folgt eine Kontrolle 16 durch den Server 2 in einer für den Server 2 zugänglichen und bevorzugt auf dem Server 2 selbst abgespeicherten Benutzerdatenbank 17, wobei der Server 2 überprüft, ob der eingegebene Benutzername mit der zuvor bestimmten Identität des Benutzers übereinstimmt. Der Server 2 überprüft auch, ob der Benutzer 9 das korrekte, d. h. das dem Benutzernamen zugeordnete Passwort eingegeben hat.

Sind sowohl der Benutzername, als auch das Passwort korrekt, wird der Anmeldevorgang fortgesetzt, indem der Start 19 eines Programmes erfolgt, das beispielsweise als Java-Programm 18 ausgeführt und vom Benutzer 9 mit der Anmelde-Seite 14.2 heruntergeladen worden ist.

Bevor das Java-Programm 18 jedoch aktiv werden kann, muss es sich bei der Chipkarte 5 oder genauer gesagt bei einem darauf abgespeicherten Kartenprogramm 5.1 anmelden 20.1. Hierzu holt sich das Java-Programm 18 beispielsweise bei einem auf dem Server 2 ablaufenden Serverprogramm 2.1 einen Autorisierungscode 20. Nach korrekter Anmeldung 20.1 folgt eine Anmeldebestätigung 20.2 durch das Kartenprogramm 5.1 und das Java-Programm 18 übermittelt dem Kartenprogramm 5.1 eine Anfrage 21 zur Übersendung des nächsten Streichlistencodes.

Aber auch das Kartenprogramm 5.1 muss sich zunächst gegenüber der ebenfalls auf der Chipkarte 5 abgespeicherten Kartendatenbank 5.2 authentifizieren, bevor es die Datenbank öffnen kann. Ist auch diese Authentifizierung 22 korrekt abgeschlossen, kann das Kartenprogramm 5.1 den nächsten Code für die Zugangsberechtigung auf dem Server 2 aus der Kartendatenbank 5.2 auslesen 23. Nach oder gleichzeitig mit dem Weiterleiten 24 des ausgelesenen Zugangscodes an das Java-Programm 18 übermittelt dieses dem Kartenprogramm 5.1 eine Bestätigung 25 für den korrekten Empfang des Zugangscodes 21. Erhält das Kartenprogramm 5.1 diese Bestätigung 25, veranlasst es die Löschung 26 des eben ausgelesenen Zugangscodes aus der Kartendatenbank 5.2.

Nachdem das Java-Programm 18 dem Kartenprogramm 5.1 den Empfang des Zugangscodes bestätigt hat, folgt die Übermittlung 27 dieses Zugangscodes an das Serverprogramm 2.1. Dieses führt zunächst eine Prüfung 28 des Zugangscodes durch. Hierbei kontrolliert das Serverprogramm 2.1, ob der ihm übermittelte Zugangscode mit dem nächsten Zugangscode auf der serverseitigen Liste, der Serverdatenbank 2.2, übereinstimmt. Falls ja, erteilt er dem Benutzer 9 die Erlaubnis 29 für den Zugriff 30 auf die gewünschten Daten. Die Kommunikation zwischen Server 2 und Benutzer 9 erfolgt weiterhin verschlüsselt.

Stimmt der Zugangscode nicht mit dem nächsten Code aus der Serverdatenbank 2.2 überein, prüft das Serverprogramm 2.1 weiter, ob der Zugangscode mit einem der nachfolgenden Zugangscodes aus seiner Serverdatenbank 2.2 übereinstimmt. Findet er den Zugangscode später in der Serverdatenbank 2.2, gibt er dem Benutzer 9 ebenfalls die Erlaubnis 29 für den gewünschten Zugriff 30. Typischerweise wird das Serverprogramm 2.1 danach seinen internen Zeiger, der jeweils auf den nächsten gültigen Zugangscode zeigt, auf den Nachfolger des übermittelten Zugangscodes setzen und sämtliche Zugangscodes davor aus seiner Serverdatenbank 2.2 löschen.

Mit Hilfe des erfindungsgemässen Verfahrens können praktisch alle erdenklichen Versuche, missbräuchlich auf vertrauliche Daten zuzugreifen, unterbunden werden. Wird beispielsweise das Anmelden eines Benutzers mitprotokolliert, gelangt der Angreifer lediglich in Kenntnis des verschlüsselten, einmaligen Zugangscodes, der, selbst wenn er entschlüsselt werden kann, nicht für einen zweiten Anmeldevorgang verwendet werden kann. Auch beim Versuch, die Chipkarte über das Internet auszulesen oder zu kopieren, wenn der Benutzer z.B. gerade online ist, schlägt fehl, denn die Chipkarte kann nur nach korrekter Authentifizierung durch den richtigen Benutzer aktiviert werden. Selbst ein Angriff, bei welchem versucht wird, mit einem fremden Kartenprogramm, beispielsweise demjenigen aus einer anderen Chipkarte, auf die Chipkarte des Benutzers zuzugreifen, kann abgewehrt werden. Bevor die Chipkarte nämlich den Zugang auf die Kartendatenbank freischaltet, muss sich das fremde Kartenprogramm direkt auf der Kartendatenbank korrekt authentifizieren. Dies aber gelingt nur dem richtigen Kartenprogramm, das als einziges über den hierfür notwendigen, einmaligen Identifikationscode verfügt.

Auch wenn die Karte verloren geht oder gestohlen wird, ist sie für einen Angreifer wertlos, denn er kann sie nicht aktivieren. Sollte ihm dies dennoch gelingen, weil er sich beispielsweise einen Fingerabdruck des Benutzers beschafft hat und der Chipkarte zudem eine physische Präsenz des Benutzers vortäuschen kann, kommt er nicht weiter, denn er kennt weder den Benutzernamen noch das Passwort zum Einloggen auf dem Server. Erst wenn sich ein potentieller Angreifer auch diese Informationen noch beschaffen kann, wäre es möglich, unbefugt Zugang zu den vertraulichen Daten zu erlangen. Allerdings dürfte der Benutzer den Verlust der Chipkarte mittlerweile bemerkt und die entsprechenden Stellen darüber informiert haben, was eine sofortige Sperrung der Chipkarte nach sich zieht.

Zusammenfassend ist festzustellen, dass durch die Benutzerauthentifikation gegenüber der Chipkarte sowie das individuelle Kartenprogramm zum Auslesen der Zugangscodes aus der Kartendatenbank der Zugriff auf die Kartendatenbank zweifach geschützt und ein missbräuchlicher Zugriff auf die in der Kartendatenbank abgespeicherten Zugangscodes wirkungsvoll unterbunden werden kann. Da die Zugangscode-Liste vor der Speicherung auf der Chipkarte an einem sicheren Ort generiert wird und der entsprechende Algorithmus nicht ausfindig gemacht werden kann, kann keiner der noch kommenden Zugangscodes der Zugangscode-Liste mit System berechnet werden. Und da einmal ausgelesene Zugangscodes aus der Kartendatenbank gelöscht werden, bevor sie zum Server übermittelt werden, ist auch eine Reproduktion der Zugangscodes selbst bei längerem Mitprotokollieren der übermittelten Daten auszuschliessen.

Die Erfindung stellt damit sicher, dass die Überprüfung der Identität des Benutzers mit bislang unerreichter Sicherheit durchgeführt werden kann und vertrauliche Daten ausschliesslich dem berechtigten Benutzer zugänglich sind, der als einziger über die notwendigen Kenntnisse und Mittel verfügt, die Chipkarte überhaupt zu aktivieren. Selbst ein gezielter, professionell vorbereiteter Angriff wird nicht zum Erfolg führen.

## Patentansprüche

1. Verfahren zur Authentifizierung eines Benutzers für einen Zugriff auf insbesondere vertrauliche Daten bzw. Bereiche einer Datenverarbeitungsvorrichtung, wobei ein Zugangscode aus einer auf einem Sicherheitsmedium, insbesondere einer Chipkarte, abgespeicherten Datenbank ausgelesen und an die Datenverarbeitungsvorrichtung übermittelt wird, **dadurch gekennzeichnet, dass** vor dem Auslesen des Zugangscodes eine Authentifizierung des Benutzers durchgeführt wird und der Zugangscode nur ausgelesen werden kann, wenn der Benutzer korrekt authentifiziert worden ist.

2. Verfahren nach Anspruch 1, **dadurch gekennzeichnet, dass** die Authentifizierung des Benutzers durchgeführt wird, indem benutzerspezifische Identifikationsmerkmale, vorzugsweise biometrische Benutzerdaten, ermittelt und diese insbesondere vom Sicherheitsmedium mit zuvor auf dem Sicherheitsmedium abgespeicherten Identifikationsmerkmalen des Benutzers verglichen werden.

3. Verfahren nach Anspruch 1 oder 2, **dadurch gekennzeichnet, dass** der Zugriff auf die Datenverarbeitungsvorrichtung über ein öffentliches Kommunikationsnetz erfolgt.

4. Verfahren nach einem der Ansprüche 1 bis 3, **dadurch gekennzeichnet, dass** zwischen dem Benutzer und der Datenverarbeitungsvorrichtung verschlüsselt kommuniziert wird, wobei zur Verschlüsselung ein asymmetrisches Verschlüsselungsverfahren, insbesondere ein Public-Key Verfahren, verwendet wird.

5. Verfahren nach einem der Ansprüche 1 bis 4, **dadurch gekennzeichnet, dass** vom Benutzer für den Zugriff auf die insbesondere vertraulichen Daten bzw. Bereiche der Datenverarbeitungsvorrichtung ein Benutzername und ein Kennwort eingegeben werden.

6. Verfahren nach einem der Ansprüche 1 bis 5, **dadurch gekennzeichnet, dass** ein Vermittlerprogramm, insbesondere ein Java-Programm, gestartet und ein auf dem Sicherheitsmedium abgespeichertes Kartenprogramm vom Vermittlerprogramm zum Auslesen des Zugangscodes aufgefordert wird, das Kartenprogramm den Zugangscode aus der Datenbank ausliest, diesen an das Vermittlerprogramm übergibt, das Vermittlerprogramm den Zugangscode an die Datenverarbeitungsvorrichtung übermittelt, die Datenverarbeitungsvorrichtung eine Prüfung des Zugangscodes durchführt und dem Benutzer den Zugriff auf die insbesondere vertraulichen Daten bzw. Bereiche erlaubt, wenn die Prüfung erfolgreich war.

7. Verfahren nach Anspruch 6, **dadurch gekennzeichnet, dass** sich das Vermittlerprogramm bei dem Kartenprogramm authentifiziert, wobei das Kartenprogramm nicht gestartet wird, wenn sich das Vermittlerprogramm nicht korrekt authentifiziert.

8. Verfahren nach Anspruch 6, **dadurch gekennzeichnet, dass** sich das Kartenprogramm auf der Datenbank authentifiziert und die Datenbank keinen Zugangscode ausliest und/oder sich selber löscht, wenn sich das Kartenprogramm nicht korrekt authentifiziert.

9. Verfahren nach Anspruch 6, **dadurch gekennzeichnet, dass** das Vermittlerprogramm dem Kartenprogramm einen Empfang des Zugangscodes bestätigt und das Kartenprogramm den Zugangscode danach aus der Datenbank löscht.

10. Anordnung zur Authentifizierung eines Benutzers für einen Zugriff auf insbesondere vertrauliche Daten bzw. Bereiche einer Datenverarbeitungsvorrichtung, umfassend ein Sicherheitsmedium und erste Mittel für einen Zugriff auf das Sicherheitsmedium, wobei das Sicherheitsmedium einen Prozessor und einen Speicher aufweist, **dadurch gekennzeichnet, dass** die Anordnung zweite Mittel zur Ermittlung von benutzerspezifischen Identifikationsmerkmalen, vorzugsweise biometrische Benutzerdaten, aufweist und auf dem Sicherheitsmedium benutzerspezifische Identifikationsmerkmale, eine Datenbank mit einer Mehrzahl von Zugangscodes und ein Programm für einen Zugriff auf die Datenbank abgespeichert sind und die Anordnung dritte Mittel zum Vergleichen der ermittelten benutzerspezifischen Identifikationsmerkmale mit den auf dem Sicherheitsmedium abgespeicherten benutzerspezifischen Identifikationsmerkmalen aufweist.

11. Anordnung nach Anspruch 10, **dadurch gekennzeichnet, dass** die zweiten und dritten Mittel in das Sicherheitsmedium integriert sind.

12. Anordnung nach Anspruch 10, **dadurch gekennzeichnet, dass** die dritten Mittel in das Sicherheitsmedium und die zweiten Mittel in die ersten Mittel integriert sind.

13. Anordnung nach einem der Ansprüche 10 bis 12, **dadurch gekennzeichnet, dass** in dem Speicher Informationen zur Identifikation des Benutzers abgespeichert sind.

14. Anordnung nach einem der Ansprüche 10 bis 13, **dadurch gekennzeichnet, dass** das Sicherheitsmedium vierte Mittel zum Löschen der Datenbank bei missbräuchlichem Zugriff darauf aufweist.

15. Sicherheitsmedium mit einem Prozessor und einem Speicher, **dadurch gekennzeichnet, dass** in dem Speicher eine Datenbank mit einer Mehrzahl von Zugangscodes, ein individuelles Programm und benutzerspezifische Identifikationsmerkmale eines Benutzers abgespeichert sind, wobei die Zugangscodes in der Datenbank ausschliesslich mit dem Programm auslesbar sind.

16. Sicherheitsmedium nach Anspruch 15, **dadurch gekennzeichnet, dass** es vorzugsweise Mittel zum Bestimmen benutzerspezifischer ldentifikationsmerkmale sowie Mittel zum Vergleichen der im Speicher abgespeicherten benutzerspezifischen Identifikationsmerkmale mit den bestimmten Identifikationsmerkmalen aufweist.
